# EUROPÄISCHE PATENTSCHRIFT

(11) **EP 4 164 999 B1**
(45) Veröffentlichungstag und Bekanntmachung des Hinweises auf die Patenterteilung: **20.12.2023**
(21) Anmeldenummer: 20739557.5
(22) Anmeldetag: 25.06.2020
(51) Int. Cl.: C04B 41/72, C04B 41/62

(54) **ZUSAMMENSETZUNG ZUM BEHANDELN EINER BETONOBERFLÄCHE**
COMPOSITION FOR TREATING A CONCRETE SURFACE
COMPOSITION POUR LE TRAITEMENT D'UNE SURFACE EN BÉTON

(43) Veröffentlichungstag der Anmeldung: 19.04.2023
(73) Patentinhaber: Fabrino Produktionsgesellschaft mbH & Co. KG, 87700 Memmingen (DE)
(72) Erfinder: HACHMEISTER, Stefanie, 32657 Lemgo (DE)
(74) Vertreter: Sandvoß, Stefanie
(86) Internationale Anmeldenummer: PCT/DE2020/100554
(87) Internationale Veröffentlichungsnummer: WO 2021/259405

(56) Entgegenhaltungen:
- EP-A1- 2 360 132
- EP-A2- 2 157 070

## Beschreibung

Die vorliegende Erfindung betrifft eine Zusammensetzung zum Behandeln einer Betonoberfläche, ein Verfahren zum Herstellen der Zusammensetzung sowie die Verwendung der Zusammensetzung in der Herstellung von Betonoberflächen mit Waschbeton-Texturierung.

Es ist bekannt, Betonoberflächen zum Beispiel für eine bessere Rutschhemmung, eine bessere Beständigkeit gegen Verschleiß oder auch für eine dauerhaftere ansprechende Optik mit einer Waschbeton-Texturierung zu versehen. Diese findet man z.B. an Gebäudefassaden, Lärmschutzwänden und Bodenplatten.

Bei Waschbeton handelt es sich um einen speziellen Beton, dessen Oberfläche eine Zuschlagskörnung umfasst, die durch Auswaschen des noch nicht vollständig ausgehärteten Betons teilweise freigelegt wird.

Waschbeton kann im Positiv-Verfahren und im Negativ-Verfahren hergestellt werden. Im Positiv-Verfahren wird auf die Oberfläche des Frischbetons ein Oberflächenverzögerer aufgetragen, der die Aushärtung des Betons verlangsamt. Während einer auf den Auftrag des Oberflächenverzögerers stattfindenden Reaktionszeit härtet der Teil des mit einer Zuschlagskörnung vermischten Betons, der nicht mit dem Oberflächenverzögerer kontaktiert ist, aus, während die mit dem Oberflächenverzögerer kontaktierte Oberfläche auswaschbar bleibt. Nach der Reaktionszeit, die üblicherweise im Bereich mehrerer Stunden bis zu zwei Tagen liegt, kann der noch nicht vollständig ausgehärtete oberflächennahe Beton daher mit Wasser bzw. durch einen Wasserstrahl ausgewaschen und/oder ausgebürstet werden, wodurch die in der ursprünglichen Mischung enthaltene Zuschlagskörnung freigelegt wird.

Im Negativ-Verfahren hingegen wird der Oberflächenverzögerer direkt auf die Schalung der Form aufgebracht. Wie auch bei dem Positiv-Verfahren erhärtet der mit der Zuschlagskörnung vermischte Beton, der nicht mit dem Oberflächenverzögerer kontaktiert ist, während der Reaktionszeit aus, wobei der mit dem Oberflächenverzögerer kontaktierte Beton auswaschbar bleibt.

Für die Herstellung von Waschbetonoberflächen ist neben der o.g. Oberflächenverzögerung auch ein Verdunstungsschutz wünschenswert, der das oberflächennahe Wasser im Beton hält, um so beispielsweise die Entstehung von Rissen in der Oberfläche zu vermeiden. Aus dem Stand der Technik ist jedoch keine geeignete Zusammensetzung zur Oberflächenbehandlung von Beton bekannt, die sowohl einen guten Verdunstungsschutz als auch eine gute Oberflächenverzögerung bietet. Beide gewünschten Effekte sind auch nur sehr schwierig zur gleichen Zeit erreichbar, da ein Oberflächenverzögerer bewirken soll, dass der oberflächliche Beton möglichst lange feucht bleibt, während ein Verdunstungsschutz bewirken soll, dass die Feuchtigkeit im Beton eingeschlossen wird.

Da auch nicht zwei verschiedene Zusammensetzungen, von denen eine einen guten Verdunstungsschutz und die andere eine gute Oberflächenverzögerung bietet, gleichzeitig eingesetzt werden können, muss in der Regel auf einen der beiden gewünschten Effekte verzichtet werden.

Die EP 2 289 859 A2 beschreibt ein wasserbasiertes Beschichtungsmittel, das eine verzögerte Freisetzung eines Modifizierungsmittels gewährt und damit ein einfaches Befüllen und Rütteln sowie eine mühelose Reinigung der Schalungen erlaubt.

Die EP 2 360 132 A1 beschreibt eine Zusammensetzung, die sowohl oberflächenverzögernde Eigenschaften aufweisen als auch einen Verdunstungsschutz bieten soll. Bei der Zusammensetzung handelt es sich um eine kationische Emulsion, die kationische Tenside enthält, die einen den Verdunstungsschutz bewirkenden Inhaltsstoff, der ein Acrylpolymer und/oder ein Paraffinwachs ist, in der wässrigen Trägerphase halten sollen. In der Praxis hat sich allerdings gezeigt, dass die Verzögerungswirkung der Zusammensetzung nach wenigen Stunden bereits signifikant nachlässt.

Die EP 2 157 070 A2 beschreibt eine Zusammensetzung mit oberflächenverzögernden Eigenschaften, die zumindest einen Alkylester einer Hydroxycarboxylverbindung und eine nicht-wässrige Trägerphase enthält.

### Aufgabe der Erfindung

Es ist die Aufgabe der vorliegenden Erfindung, eine alternative Zusammensetzung bereitzustellen, die die o.g. aus dem Stand der Technik bekannten Nachteile vermeidet und sich insbesondere durch einen guten Verdunstungsschutz sowie durch eine gute Verzögerungswirkung auszeichnet, die beide auch über einen längeren Zeitraum aufrechterhalten werden können als dies bei aus dem Stand der Technik bekannten Zusammensetzungen der Fall ist.

### Allgemeine Beschreibung der Erfindung

Die Erfindung löst diese Aufgabe mit den Merkmalen der Ansprüche und insbesondere durch Bereitstellen einer wasserbasierten Zusammensetzung zum Behandeln einer Betonoberfläche, wobei die Zusammensetzung die folgenden Inhaltsstoffe enthält oder daraus besteht:
- mindestens 35,0 Gew.-% Wasser;
- 20,0-35,0 Gew.-% einer einen oder mehrere Fettsäurealkylester enthaltenden Emulsion;
- 20,0-35,0 Gew.-% einer Wachsdispersion;
- 0,5-1,5 Gew.-% Polyethermodifiziertes Siloxan;
- 0,1-0,3 Gew.-% Entschäumer;
- 0,05-0,3 Gew.-% Verdicker;
- 0,05-0,3 Gew.-% Konservierungsmittel;
- < 10 Gew.-% eines Zuckers und/oder einer organischen Säure und/oder eines Derivats einer organischen Säure
- optional Pigmente.

Es wurde überraschend gefunden, dass die erfindungsgemäße wasserbasierte Zusammensetzung sowohl einen Verdunstungsschutz für frische Betonoberflächen als auch eine oberflächenverzögernde Wirkung aufweist, die beide dem Verdunstungsschutz bzw. der oberflächenverzögernden Wirkung, die aus dem Stand der Technik bekannte Zusammensetzungen zur Oberflächenbehandlung von Frischbeton bieten, signifikant überlegen sind. Insbesondere ist das Auswaschergebnis, das nach Auftrag einer erfindungsgemäßen Zusammensetzung auf eine Betonoberfläche erzielt werden kann, selbst nach einer vergleichsweise langen Zeitspanne von 96 Stunden noch nahezu identisch zu dem Auswaschergebnis, das bei gleichen Bedingungen 48 Stunden nach dem Auftrag der Zusammensetzung erzielt wird. Die oberflächenverzögernde Wirkung der erfindungsgemäßen Zusammensetzung ist daher äußerst langanhaltend, wie an späterer Stelle noch an ausgewählten Beispielen gezeigt wird.

Der Verdunstungsschutz von Betonoberflächen wird beispielsweise gemäß der französischen Norm NF P 18-371 bestimmt. Gemäß den in der vorgenannten Norm enthaltenen Vorschriften wird jeweils 6 Stunden und 24 Stunden nach dem Auftrag einer Zusammensetzung auf eine Betonoberfläche ein sog. Schutzkoeffizient bestimmt, der die prozentuale Verringerung der Verdunstung im Vergleich zu einer unbehandelten Betonoberfläche mit ansonsten gleicher Beschaffenheit und unter gleichen Bedingungen angibt. Auch hier übertrifft der durch die erfindungsgemäße Zusammensetzung gewährte Verdunstungsschutz den von aus dem Stand der Technik bekannten Zusammensetzungen gewährten Verdunstungsschutz sowohl nach 6 Stunden wie auch nach 24 Stunden signifikant.

Produkte mit oberflächenverzögernden Eigenschaften zur Behandlung von Betonoberflächen weisen bekanntermaßen durch den Zusatz ausgewählter Pigmente eine Färbung auf, anhand derer die mittlere Auswaschtiefe nach einer definierten Reaktionszeit, d.h. nach einer definierten Zeitspanne nach dem Auftrag des Produktes auf die Betonoberfläche, erkennbar ist. Oftmals findet sich die Färbung der Produkte auch in der von den Herstellern gewählten Produktbezeichnungen wieder. Die Tabelle 1 gibt eine Übersicht über die Bedeutung der jeweiligen Farbe:

**Tabelle 1: Bedeutung der Farben hinsichtlich Körnung und mittlerer Auswaschtiefe**

| Farbe | Körnung | Mittlere Auswaschtiefe |
|---|---|---|
| Rot-orange | 0-3 mm | ca. 0,2 mm |
| Blau | 0-4 / 8 mm | ca. 0,5 mm |
| Braun | 2-4 / 8 mm | ca. 1,0 mm |
| Grün | 4-8 / 10 mm | ca. 2,0 mm |
| Gelb | 6-8 / 10 mm | ca. 2,5 mm |
| Pink | 8-16 mm | ca. 3,5 mm |
| Grau | 12-16 mm | ca. 5,0 mm |
| weiß | 12-16 mm | ca. 5,5 mm |
| orange | 18-25 mm | ca. 6,5 mm |
| violett | 18-25 mm | ca. 7,0 mm |

Bevorzugt enthält auch die erfindungsgemäße wasserbasierte Zusammensetzung farbige Pigmente, wobei die Farbe der Pigmente die mittlere Auswaschtiefe der Zusammensetzung nach einer definierten Zeitspanne nach Auftrag auf eine Betonoberfläche sowie den mittleren Durchmesser der Zuschlagskörnung angibt, für die die Zusammensetzung als Mittel mit oberflächenverzögernden Eigenschaften geeignet ist.

Gemäß einer bevorzugten Ausführungsform enthält die erfindungsgemäße Zusammensetzung zum Behandeln einer Betonoberfläche die eingangs genannten Inhaltsstoffe zu den folgenden Gewichtsanteilen oder besteht zu den folgenden Gewichtsanteilen aus diesen Inhaltsstoffen:
- mindestens 35,0 Gew.-% Wasser;
- 23,0-29,0 Gew.-% einer einen oder mehrere Fettsäurealkylester enthaltenden Emulsion;
- 25,0-30,0 Gew.-% einer Wachsdispersion;
- 0,7-1,3 Gew.-% Polyethermodifiziertes Siloxan;
- 0,1-0,3 Gew.-% Entschäumer;
- 0,1-0,2 Gew.-% Verdicker;
- 0,12-0,19 Gew.-% Konservierungsmittel;
- < 10 Gew.-% eines Zuckers und/oder einer organischen Säure und/oder eines Derivats einer organischen Säure
- optional Pigmente.

Die in der Zusammensetzung enthaltene Fettsäurealkylester enthaltende Emulsion ist eine Emulsion, die einen oder mehrere Fettsäurealkylester, insbesondere Fettsäuremethylester, Fettsäureethylester, Fettsäurepropylester, Fettsäurebutylester, Fettsäurepentylester oder Fettsäurehexylester, enthält. Der Fettsäurerest des oder der Fettsäurealkylester ist dabei insbesondere ein gesättigter C16-C18-Fettsäurerest oder ein ungesättigter C18-Fettsäurerest. Alternativ kann die erfindungsgemäße Zusammensetzung auch eine Mischung verschiedener Fettsäurealkylester enthalten, deren Fettsäurereste jeweils unabhängig voneinander aus der Gruppe ausgewählt sind, die einen gesättigten C16-Fettsäurerest, einen gesättigten C17-Fettsäurerest, einen gesättigten C18-Fettsäurerest und einen ungesättigten C18-Fettsäurerest enthält, wobei die Alkylgruppe der Fettsäurealkylester jeweils unabhängig voneinander aus der Gruppe ausgewählt ist, die -methyl, -ethyl, -propyl, - butyl, -pentyl und -hexyl umfasst.

Zusätzlich zu dem oder den Fettsäurealkylester(n) enthält die Fettsäurealkylester enthaltende Emulsion auch nichtionische und/oder anionische Tenside, Wasser sowie optional Konservierungsmittel. Gemäß einer bevorzugten Ausführungsform enthält oder besteht die Fettsäurealkylester enthaltende Emulsion aus:
- 13,0-16,0 Gew.-% eines oder mehrerer Fettsäurealkylester, ausgewählt aus C₁₆-C₁₈-gesättigten Fettsäurealkylestern und C₁₈ -ungesättigtem Fettsäurealkylester,
- 5,0-8,0 Gew.-% nichtionische und/oder anionische Tenside
- 0,1-0,2 Gew.-% Konservierungsmittel; und
- Wasser

Gemäß einer Ausführungsform ist in der Fettsäurealkylester enthaltende Emulsion ein Konservierungsmittel enthalten, das ein Mikrobiozid auf der Basis von Tetramethylolacetylendiharnstoff und Isothiazolon ist.

Die erfindungsgemäße Zusammensetzung zum Behandeln einer Betonoberfläche enthält weiterhin eine Wachsdispersion, die vorzugsweise eine Paraffindispersion ist.

Weiterhin ist in der erfindungsgemäßen Zusammensetzung auch zumindest ein Verdicker enthalten. Unter einem Verdicker wird für die Zwecke der Erfindung ein die Viskosität erhöhendes Mittel bzw. ein die Viskosität erhöhender Inhaltsstoff verstanden. Insbesondere kann der Verdicker dabei aus der Gruppe ausgewählt sein, die Konjac Gum, Xanthan Gum, Guar, Cellulose sowie Derivate von Konjac Gum, Xanthan Gum, Guar und Cellulose und auch beliebige Kombinationen dieser umfasst oder daraus besteht.

Darüber hinaus enthält die erfindungsgemäße Zusammensetzung auch zumindest einen Entschäumer. Unter einem Entschäumer wird für die Zwecke der Erfindung eine Verbindung verstanden, die in der Lage ist, unerwünschte Schaumbildung zu unterbinden und/oder bereits gebildeten Schaum zu zerstören. Vorzugsweise enthält die Zusammensetzung ein Polydimethylsiloxan oder ein modifiziertes Polydimethylsiloxan als Entschäumer, insbesondere ein Polyethermodifiziertes Polydimethylsiloxan.

Das in der erfindungsgemäßen Zusammensetzung enthaltene Polyethermodifizierte Siloxan ist ein Siloxan, das eine oder mehrere Polyether-Funktionalitäten aufweist.

Erfindungsgemäß enthält die Zusammensetzung zum Behandeln einer Betonoberfläche auch bis zu 10 Gew.-% eines Zuckers und/oder einer organischen Säure und/oder eines Derivats einer organischen Säure. Ein bevorzugter Zucker ist dabei Saccharose, wobei alternativ oder zusätzlich auch ein anderes Mono- oder Disaccharid enthalten sein kann. Als organische Säure kann insbesondere Zitronensäure, Weinsäure und/oder Oxalsäure in der Zusammensetzung enthalten sein und in der Zusammensetzung enthaltene Derivate organischer Säuren sind insbesondere aus der Gruppe ausgewählt, die Derivate der Zitronensäure, Derivate der Weinsäure, Derivate der Oxalsäure und Mischungen dieser umfasst oder daraus besteht.

Die Erfindung betrifft weiterhin auch ein Verfahren zum Herstellen einer erfindungsgemäßen Zusammensetzung, in dem
- mindestens 35,0 Gew.-% Wasser;
- 20,0-35,0 Gew.-% einer einen oder mehrere Fettsäurealkylester enthaltenden Emulsion;
- 20,0-35,0 Gew.-% einer Wachsdispersion;
- 0,5-1,5 Gew.-% Polyethermodifiziertes Siloxan;
- 0,1-0,3 Gew.-% Entschäumer;
- 0,05-0,3 Gew.-% Verdicker;
- 0,05-0,3 Gew.-% Konservierungsmittel;
- < 10 Gew.-% eines Zuckers und/oder einer organischen Säure und/oder eines Derivats einer organischen Säure;
- optional Pigmente
zu einer homogenen Zusammensetzung vermischt werden.

In einer bevorzugten Ausführungsform des Verfahrens werden
- mindestens 35,0 Gew.-% Wasser;
- 23,0-29,0 Gew.-% einer einen oder mehrere Fettsäurealkylester enthaltenden Emulsion;
- 25,0-30,0 Gew.-% einer Wachsdispersion;
- 0,7-1,3 Gew.-% Polyethermodifiziertes Siloxan;
- 0,1-0,3 Gew.-% Entschäumer;
- 0,1-0,2 Gew.-% Verdicker;
- 0,12-0,19 Gew.-% Konservierungsmittel;
- < 10 Gew.-% eines Zuckers und/oder einer organischen Säure und/oder eines Derivats einer organischen Säure
zu einer homogenen Zusammensetzung vermischt.

Optional werden der Zusammensetzung auch farbige Pigmente beigemischt, wobei die Farbe der Pigmente so gewählt ist, dass sie die mittlere Auswaschtiefe der Zusammensetzung nach einer definierten Zeitspanne nach Auftrag auf eine Betonoberfläche gemäß der voranstehenden Tabelle 1 angibt.

Die Erfindung betrifft weiterhin auch die Verwendung einer erfindungsgemäßen Zusammensetzung in der Herstellung von Betonoberflächen mit Waschbeton-Texturierung, wobei das Auftragen der Zusammensetzung auf eine Zuschlagskörnung umfassende Betonoberfläche und das Entfernen einer mit der Zusammensetzung kontaktierten und nicht vollständig ausgehärteten Schicht des Betons mittels eines Wasserstrahls und/oder mittels Ausbürstens nach einer definierten Zeitspanne nach dem Auftrag der Zusammensetzung auf die Betonoberfläche erfolgt.

In Bezug auf das erfindungsgemäße Verfahren zur Herstellung der Zusammensetzung und in Bezug auf die Verwendung der Zusammensetzung in der Herstellung von Betonoberflächen mit Waschbeton-Texturierung sind alle Inhaltsstoffe der Zusammensetzung so definiert wie im Voranstehenden mit Bezug auf die Zusammensetzung als solche beschrieben. Daher kann die voranstehende Beschreibung der Zusammensetzung auch für die Konkretisierung der Inhaltsstoffe in dem Verfahren zur Herstellung der Zusammensetzung sowie deren Verwendung in der Herstellung von Betonoberflächen mit Waschbeton-Texturierung verwendet werden.

### Genaue Beschreibung der Erfindung

Die Erfindung wird nun genauer anhand von Ausführungsbeispielen und mit Bezug auf die Figuren beschrieben, die
- in der Figur 1 ein Balkendiagramm zum Vergleich des Verdunstungsschutzes einer erfindungsgemäßen Zusammensetzung im Vergleich zu aus dem Stand der Technik bekannten Zusammensetzungen zeigen, und
- in der Figur 2 das Auswaschergebnis von mit einer erfindungsgemäßen Zusammensetzung im Vergleich zu mit aus dem Stand der Technik bekannten Zusammensetzungen behandelter Betonoberflächen nach verschiedenen Zeitintervallen zeigen.

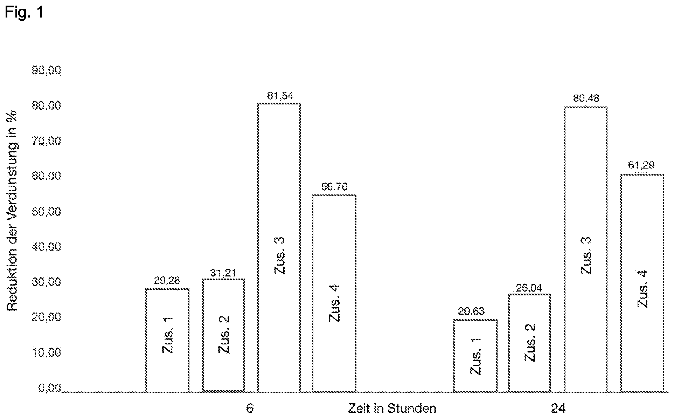

Die Figur 1 zeigt ein Balkendiagramm, das den von einer erfindungsgemäßen Zusammensetzung gewährten Verdunstungsschutz dem von drei herkömmlichen Zusammensetzungen gewährten Verdunstungsschutz, jeweils nach 6 Stunden und 24 Stunden gegenüberstellt.

Die erfindungsgemäße Zusammensetzung ist als Zusammensetzung 3 (Zus. 3) in dem Diagramm aufgeführt und enthält Inhaltsstoffe gemäß der in der nachstehenden Tabelle 2 angegebenen Rahmenrezeptur.

**Tabelle 2: Rahmenrezeptur einer erfindungsgemäßen Zusammensetzung**

| Inhaltsstoff | Gewichtsanteil in Gew.-% |
|---|---|
| Wasser | 37,71 - 42,22 |
| Farbpaste | 0,01 - 0,02 |
| Xanthan (Verdicker) | 0,16 - 0,19 |
| Entschäumer | 0,20 - 0,21 |
| Konservierungsmittel | 0,16 - 0,16 |
| Weinsäure | 0,00 - 3,18 |
| Zitronensäure | 0,00 - 4,78 |
| Zucker | 0,00 - 2,96 |
| Polyethermodifiziertes Siloxan | 0,99 - 1,02 |
| Fettsäurealkylester enthaltende Emulsion | 25,73 - 26,63 |
| Paraffindispersion | 27,27 - 28,23 |

Bei der Zusammensetzung 1 (Zus. 1) handelt es sich um eine aus dem Stand der Technik bekannte Zusammensetzung mit einer Auswaschtiefe von 4 mm, die unter dem Handelsnamen CHRYSO^{®} Deco Lav P 05 Peach erhältlich ist.

Bei der Zusammensetzung 2 (Zus. 2) handelt es sich um eine aus dem Stand der Technik bekannte Zusammensetzung mit einer Auswaschtiefe von 2 mm, die unter dem Handelsnamen CHRYSO^{®} Deco Lav P 03 Blue erhältlich ist.

Bei der Zusammensetzung 4 (Zus. 4) handelt es sich um eine aus dem Stand der Technik bekannte Zusammensetzung mit einer Auswaschtiefe von 3,5 mm, die unter dem Handelsnamen Heratol PV6/80 pink erhältlich ist.

Der Verdunstungsschutz, den die erfindungsgemäße Zusammensetzung und die drei aus dem Stand der Technik bekannten Vergleichs-Zusammensetzungen bieten, wurde gemäß der französischen Norm NF P 18-371 bestimmt. Dazu wurde jeweils 6 Stunden und 24 Stunden nach dem Auftrag der Zusammensetzungen auf eine Betonoberfläche der Schutzkoeffizient bestimmt, der die prozentuale Verringerung der Verdunstung im Vergleich zu einer unbehandelten Betonoberfläche mit ansonsten gleicher Beschaffenheit und unter gleichen Bedingungen angibt. Die Ergebnisse sind in dem Balkendiagramm in Figur 1 aufgeführt.

Dem Balkendiagramm der Figur 1 ist zu entnehmen, dass die erfindungsgemäße Zusammensetzung (Zus. 3) sowohl nach 6 Stunden als auch nach 24 Stunden einen deutlich besseren Verdunstungsschutz bietet als die drei herkömmlichen Zusammensetzungen. Denn der von der erfindungsgemäßen Zusammensetzung gewährte Verdunstungsschutz bewirkt nach 6 Stunden eine Verringerung der Verdunstung im Vergleich zu einer unbehandelten Betonoberfläche um 81,54 %, während die Verringerung der Verdunstung der besten getesteten aus dem Stand der Technik bekannten Zusammensetzung (Zus. 4) lediglich 56,7 % beträgt.

Nach 24 Stunden bewirkt der von der erfindungsgemäßen Zusammensetzung gewährte Verdunstungsschutz eine Verringerung der Verdunstung im Vergleich zu einer unbehandelten Betonoberfläche um 80,48 %, während die Verringerung der Verdunstung der besten getesteten aus dem Stand der Technik bekannten Zusammensetzung (Zus. 4) lediglich 61,29 % beträgt.

Die beiden aus dem Stand der Technik bekannten Zusammensetzungen 1 und 2 bieten sowohl nach 6 Stunden als auch nach 24 Stunden einen deutlich geringeren Verdunstungsschutz, der jeweils um den Faktor 2 bis 4 unter dem Verdunstungsschutz liegt, den die erfindungsgemäße Zusammensetzung bietet.

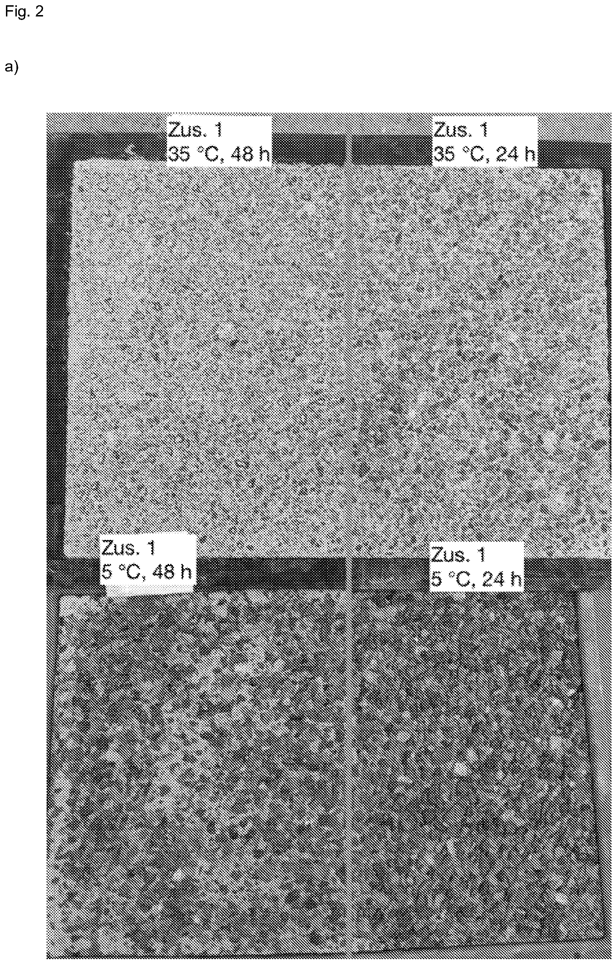

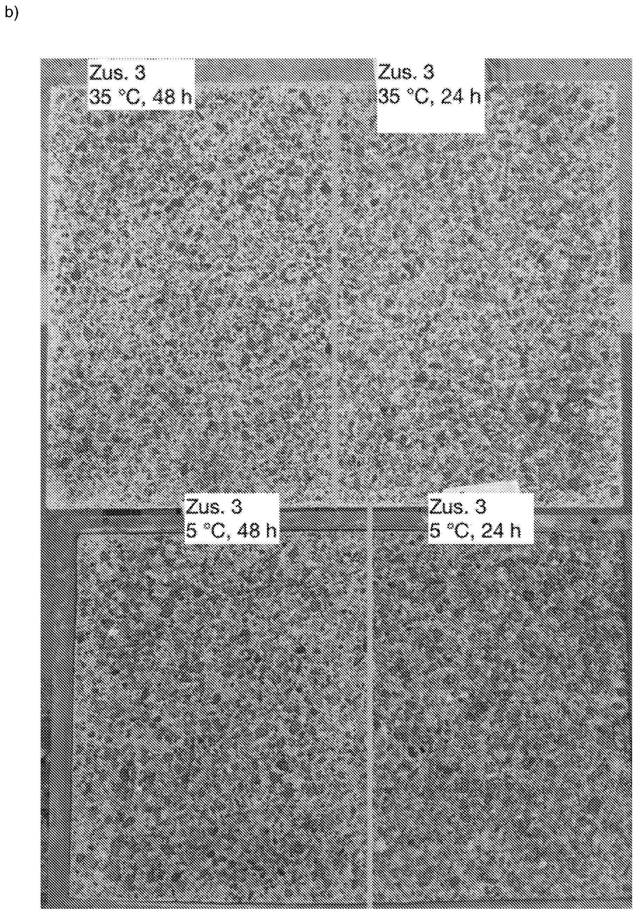

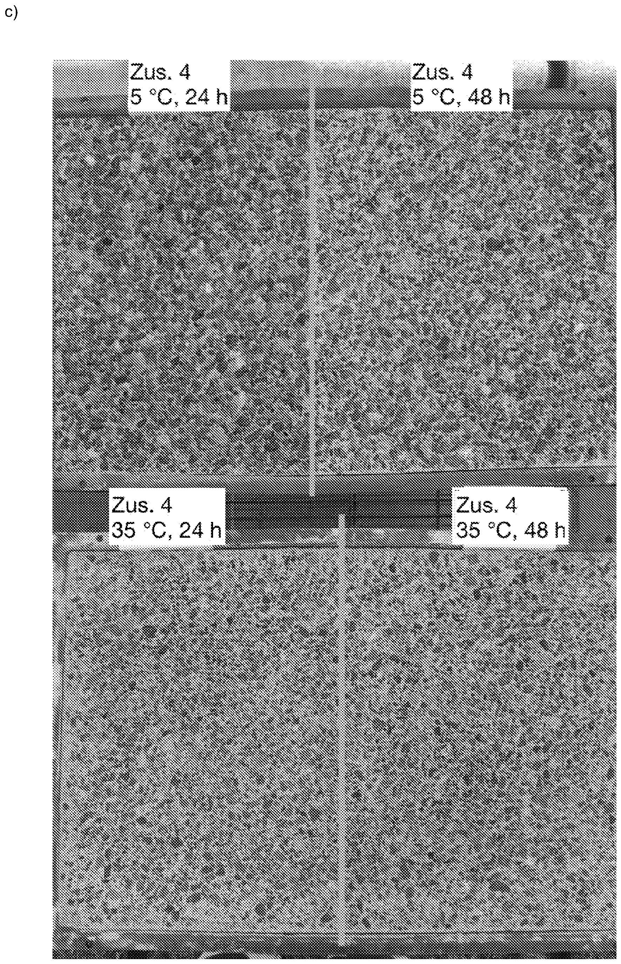

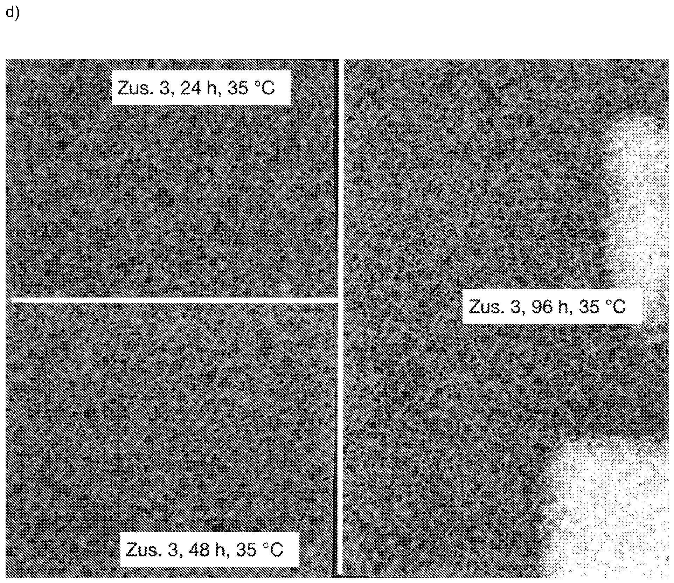

In der Figur 2 ist das Auswaschergebnis von mit einer erfindungsgemäßen Zusammensetzung (Zus. 3) im Vergleich zu mit aus dem Stand der Technik bekannten Zusammensetzungen behandelter Betonoberflächen nach verschiedenen Zeitintervallen abgebildet. Anhand der Auswaschergebnisse können Rückschlüsse auf die oberflächenverzögernde Wirkung der jeweiligen Zusammensetzungen geschlossen werden.

Die verwendete erfindungsgemäße Zusammensetzung (Zus. 3) enthielt Inhaltsstoffe gemäß der in der vorstehenden Tabelle 2 angegebenen Rahmenrezeptur. Als Vergleichszusammensetzungen wurden die für die Verdunstungsschutz-Experimente gewählten Zusammensetzungen 1 (Zus. 1) und 4 (Zus. 4) gewählt.

In den Teilfiguren a-c sind die Auswaschergebnisse für jede der Zusammensetzungen 1, 3 und 4 jeweils
- bei 5 °C, 24 Stunden nach Auftrag der Zusammensetzung;
- bei 35 °C, 24 Stunden nach Auftrag der Zusammensetzung;
- bei 5 °C, 48 Stunden nach Auftrag der Zusammensetzung; und
- bei 35 °C, 48 Stunden nach Auftrag der Zusammensetzung
abgebildet.

Generell ist bei allen Experimenten zu sehen, dass die Auswaschergebnisse erwartungsgemäß bei niedrigerer Temperatur und kürzerer Reaktionszeit besser sind.

Der Figur 2b) kann entnommen werden, dass bei der erfindungsgemäßen Zusammensetzung (Zus. 3) bei 5 °C kein Unterschied und bei 35 °C nur ein sehr geringer Unterschied zwischen den Auswaschergebnissen, die jeweils nach 24 und 48 Stunden erzielt werden, wahrnehmbar ist. Dies ist bei den Vergleichszusammensetzungen 1 und 4 anders, wie den Figuren 2a) und 2c) entnommen werden kann, denn hier ist jeweils ein deutlich wahrnehmbarer Unterschied zwischen den Auswaschergebnissen nach 24 Stunden und den Auswaschergebnissen nach 48 Stunden vorhanden.

Da die Auswaschergebnisse, die durch Anwendung der erfindungsgemäßen Zusammensetzung erzielt werden konnten, sich nach 24 bzw. 48 Stunden selbst bei erhöhter Temperatur von 35 °C nur sehr wenig unterschieden, wurde zusätzlich das Auswaschergebnis einer mit der erfindungsgemäßen Zusammensetzung behandelten Oberfläche 96 Stunden nach Auftrag der Zusammensetzung ermittelt und mit den nach 24 bzw. 48 Stunden erzielten Ergebnissen verglichen. Die entsprechenden Ergebnisse sind in der Figur 2d) gegenübergestellt, aus der hervorgeht, dass bei Verwendung der erfindungsgemäßen Zusammensetzung selbst bei Verdopplung der Reaktionszeit von 48 Stunden auf 96 Stunden das Auswaschergebnis konstant bleibt. Die von der erfindungsgemäßen Zusammensetzung verliehene oberflächenverzögernde Wirkung bleibt daher über einen sehr langen Zeitraum in etwa gleichem Ausmaß aufrechterhalten.

Zusammenfassend bleibt festzuhalten, dass die Behandlung einer Betonoberfläche mit einer erfindungsgemäßen Zusammensetzung dieser nicht nur einen sehr guten Verdunstungsschutz bietet, sondern auch eine optimale Oberflächenverzögerung bewirkt, die noch dazu über einen sehr langen Zeitraum aufrechterhalten bleiben.

Die in der vorstehenden Beschreibung, in den Figuren sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Zusammensetzung zum Behandeln einer Betonoberfläche, **dadurch gekennzeichnet, dass** die Zusammensetzung die folgenden Inhaltsstoffe enthält:
- mindestens 35,0 Gew.-% Wasser;
- 20,0-35,0 Gew.-% einer einen oder mehrere Fettsäurealkylester enthaltenden Emulsion;
- 20,0-35,0 Gew.-% einer Wachsdispersion;
- 0,5-1,5 Gew.-% Polyethermodifiziertes Siloxan;
- 0,1-0,3 Gew.-% Entschäumer;
- 0,05-0,3 Gew.-% Verdicker;
- 0,05-0,3 Gew.-% Konservierungsmittel;
- < 10 Gew.-% eines Zuckers und/oder einer organischen Säure und/oder eines Derivats einer organischen Säure.

2. Zusammensetzung nach Anspruch 1, **dadurch gekennzeichnet, dass** diese weiterhin farbige Pigmente enthält, wobei die Farbe der Pigmente die mittlere Auswaschtiefe der Zusammensetzung nach einer definierten Zeitspanne nach Auftrag auf eine Betonoberfläche angibt.

3. Zusammensetzung nach einem der Ansprüche 1 oder 2, **dadurch gekennzeichnet, dass** die Zusammensetzung die Inhaltsstoffe zu den folgenden Gewichtsanteilen enthält oder aus diesen besteht:
- mindestens 35,0 Gew.-% Wasser;
- 23,0-29,0 Gew.-% einer einen oder mehrere Fettsäurealkylester enthaltenden Emulsion;
- 25,0-30,0 Gew.-% einer Wachsdispersion;
- 0,7-1,3 Gew.-% Polyethermodifiziertes Siloxan;
- 0,1-0,3 Gew.-% Entschäumer;
- 0,1-0,2 Gew.-% Verdicker;
- 0,12-0,19 Gew.-% Konservierungsmittel;
- < 10 Gew.-% eines Zuckers und/oder einer organischen Säure und/oder eines Derivats einer organischen Säure
- optional Pigmente.

4. Zusammensetzung nach einem der voranstehenden Ansprüche, **dadurch gekennzeichnet, dass** die Fettsäurealkylester enthaltende Emulsion einen oder mehrere Fettsäurealkylester, ausgewählt aus C₁₆-C₁₈-gesättigten Fettsäurealkylestern und C₁₈ -ungesättigtem Fettsäurealkylester, sowie nichtionische und/oder anionische Tenside enthält.

5. Zusammensetzung nach einem der voranstehenden Ansprüche, **dadurch gekennzeichnet, dass** der Verdicker aus der Gruppe ausgewählt ist, die Konjac Gum, Xanthan Gum, Guar, Cellulose sowie Derivate von Konjac Gum, Xanthan Gum, Guar und Cellulose und auch beliebige Kombinationen dieser umfasst oder daraus besteht.

6. Zusammensetzung nach einem der voranstehenden Ansprüche, **dadurch gekennzeichnet, dass** die organische Säure Zitronensäure, Weinsäure oder Oxalsäure ist und das Derivat der organischen Säure ein Derivat der Zitronensäure, Weinsäure oder Oxalsäure ist.

7. Zusammensetzung nach einem der voranstehenden Ansprüche, **dadurch gekennzeichnet, dass** die Zusammensetzung ein Polydimethylsiloxan oder ein modifiziertes Polydimethylsiloxan als Entschäumer enthält.

8. Zusammensetzung nach einem der voranstehenden Ansprüche, **dadurch gekennzeichnet, dass** die Wachsdispersion eine Paraffindispersion ist.

9. Zusammensetzung nach einem der voranstehenden Ansprüche, **dadurch gekennzeichnet, dass** das Konservierungsmittel eine antimikrobiell wirkende Substanz auf der Basis von Bromnitropropandiol und/oder Isothiazolon ist.

10. Zusammensetzung nach einem der voranstehenden Ansprüche, **dadurch gekennzeichnet, dass** die Fettsäurealkylester enthaltende Emulsion
- 13,0-16,0 Gew.-% eines oder mehrerer Fettsäurealkylester, ausgewählt aus C₁₆-C₁₈-gesättigten Fettsäurealkylestern und C₁₈ -ungesättigtem Fettsäurealkylester
- 5,0-8,0 Gew.-% nichtionische und/oder anionische Tenside
- 0,1-0,2 Gew.-% Konservierungsmittel; und
- Wasser
enthält oder daraus besteht.

11. Verfahren zum Herstellen einer Zusammensetzung nach einem der voranstehenden Ansprüche, **dadurch gekennzeichnet, dass**
- mindestens 35,0 Gew.-% Wasser;
- 20,0-35,0 Gew.-% einer einen oder mehrere Fettsäurealkylester enthaltenden Emulsion;
- 20,0-35,0 Gew.-% einer Wachsdispersion;
- 0,5-1,5 Gew.-% Polyethermodifiziertes Siloxan;
- 0,1-0,3 Gew.-% Entschäumer;
- 0,05-0,3 Gew.-% Verdicker;
- 0,05-0,3 Gew.-% Konservierungsmittel;
- < 10 Gew.-% eines Zuckers und/oder einer organischen Säure und/oder eines Derivats einer organischen Säure
zu einer homogenen Zusammensetzung vermischt werden.

12. Verfahren nach Anspruch 11, **dadurch gekennzeichnet, dass** der Zusammensetzung auch farbige Pigmente beigemischt werden, wobei die Farbe der Pigmente so gewählt ist, dass sie die mittlere Auswaschtiefe der Zusammensetzung nach einer definierten Zeitspanne nach Auftrag auf eine Betonoberfläche angibt.

13. Verwendung einer Zusammensetzung nach einem der Ansprüche 1 bis 10 in der Herstellung von Betonoberflächen mit Waschbeton-Texturierung, **gekennzeichnet durch** das Auftragen der Zusammensetzung auf eine Zuschlagskörnung umfassende Betonoberfläche und das Entfernen einer mit der Zusammensetzung kontaktierten und nicht vollständig ausgehärteten Schicht des Betons mittels eines Wasserstrahls und/oder mittels Ausbürstens nach einer definierten Zeitspanne nach dem Auftrag der Zusammensetzung auf die Betonoberfläche.

## Claims

1. Composition for treating a concrete surface, **characterized in that** the composition contains the following ingredients:
- at least 35.0 % by weight of water;
- 20.0-35.0 % by weight of an emulsion containing one or more fatty acid alkyl ester(s);
- 20.0-35.0 % by weight of a wax dispersion;
- 0.5-1.5 % by weight of polyether-modified siloxane;
- 0.1-0.3 % by weight of defoamer;
- 0.05-0.3 % by weight of thickener;
- 0.05-0.3 % by weight of preservative;
- < 10 % by weight of a sugar and/or an organic acid and/or a derivative of an organic acid.

2. Composition according to claim 1, **characterized in that** it further comprises coloured pigments, the colour of the pigments indicating the average washout depth of the composition after a defined period of time after application to a concrete surface.

3. Composition according to one of claims 1 or 2, **characterized in that** the composition contains the ingredients in the following proportions by weight or consists thereof:
- at least 35.0 % by weight of water;
- 23.0-29.0 % by weight of an emulsion containing one or more fatty acid alkyl ester(s);
- 25.0-30.0 % by weight of a wax dispersion;
- 0.7-1.3 % by weight of polyether-modified siloxane;
- 0.1-0.3 % by weight of defoamer;
- 0.1-0.2 % by weight of thickener;
- 0.12-0.19 % by weight of preservative;
- < 10 % by weight of a sugar and/or an organic acid and/or a derivative of an organic acid
- optionally pigments.

4. Composition according to one of the preceding claims, **characterized in that** the fatty acid alkyl ester-containing emulsion contains one or more fatty acid alkyl esters selected from C₁₆-C₁₈-saturated fatty acid alkyl esters and C₁₈-unsaturated fatty acid alkyl esters, as well as nonionic and/or anionic surfactants.

5. Composition according to one of the preceding claims, **characterized in that** the thickener is selected from the group comprising or consisting of konjac gum, xanthan gum, guar, cellulose as well as derivatives of konjac gum, xanthan gum, guar and cellulose and also any combinations thereof.

6. Composition according to one of the preceding claims, **characterized in that** the organic acid is citric acid, tartaric acid or oxalic acid and the derivative of the organic acid is a derivative of citric acid, tartaric acid or oxalic acid.

7. Composition according to one of the preceding claims, **characterized in that** the composition comprises a polydimethylsiloxane or a modified polydimethylsiloxane as defoamer.

8. Composition according to one of the preceding claims, **characterized in that** the wax dispersion is a paraffin dispersion.

9. Composition according to one of the preceding claims, **characterized in that** the preservative is an antimicrobially active substance based on bromonitropropanediol and/or isothiazolone.

10. Composition according to one of the preceding claims, **characterized in that** the emulsion containing fatty acid alkyl ester(s) contains
- 13.0-16.0 % by weight of one or more fatty acid alkyl esters selected from C₁₆-C₁₈-saturated fatty acid alkyl esters and C₁₈-unsaturated fatty acid alkyl ester
- 5.0-8.0 % by weight nonionic and/or anionic surfactants
- 0.1-0.2 % by weight preservatives; and
- water
or consists thereof.

11. Process for production of a composition according to one of the preceding claims, **characterized in that**
- at least 35.0 % by weight of water;
- 20.0-35.0 % by weight of an emulsion containing one or more fatty acid alkyl ester(s);
- 20.0-35.0 % by weight of a wax dispersion;
- 0.5-1.5 % by weight of polyether-modified siloxane;
- 0.1-0.3 % by weight of defoamer;
- 0.05-0.3 % by weight of thickener;
- 0.05-0.3 % by weight preservative;
- < 10 % by weight of a sugar and/or an organic acid and/or a derivative of an organic acid
are mixed to a homogeneous composition.

12. Process according to claim 11, **characterized in that** coloured pigments are also admixed to the composition, wherein the colour of the pigments is selected to indicate the average washout depth of the composition after a defined period of time after application to a concrete surface.

13. Use of a composition according to one of the claims 1 to 10 in the production of concrete surfaces having exposed-aggregate concrete texturing, **characterized by** applying the composition to a concrete surface comprising aggregate and removing a layer of the concrete contacted with the composition and not fully cured by means of a water jet and/or by means of brushing after a defined period of time after application of the composition to the concrete surface.

## Revendications

1. Composition destinée au traitement d'une surface en béton, **caractérisée en ce que** la composition contient les composants suivants :
- au moins 35,0 % en poids d'eau ;
- 20,0-35,0 % en poids d'une émulsion contenant un ou plusieurs esters alkyliques d'acides gras ;
- 20,0-35,0 % en poids d'une dispersion de cire ;
- 0,5-1,5 % en poids de siloxane modifié avec un polyéther ;
- 0,1-0,3 % en poids d'antimousse ;
- 0,05-0,3 % en poids d'épaississant ;
- 0,05-0,3 % en poids de conservateur ;
- < 10 % en poids d'un sucre et/ou d'un acide organique et/ou d'un dérivé d'un acide organique.

2. Composition selon la revendication 1, **caractérisée en ce que** celle-ci contient en outre des pigments colorés, la couleur des pigments indiquant la profondeur moyenne d'élimination par lavage de la composition après un intervalle de temps défini après application sur une surface de béton.

3. Composition selon l'une quelconque des revendications 1 ou 2, **caractérisée en ce que** la composition contient les composants en les proportions en poids suivantes ou consiste en ces derniers :
- au moins 35,0 % en poids d'eau ;
- 23,0-29,0 % en poids d'une émulsion contenant un ou plusieurs esters alkyliques d'acides gras ;
- 25,0-30,0 % en poids d'une dispersion de cire ;
- 0,7-1,3 % en poids de siloxane modifié avec un polyéther ;
- 0,1-0,3 % en poids d'antimousse ;
- 0,1-0,2 % en poids d'épaississant ;
- 0,12-0,19 % en poids de conservateur ;
- < 10% en poids d'un sucre et/ou d'un acide organique et/ou d'un dérivé d'un acide organique
- des pigments optionnels.

4. Composition selon l'une quelconque des revendications précédentes, **caractérisée en ce que** l'émulsion contenant des esters alkyliques d'acides gras contient un ou plusieurs esters alkyliques d'acides gras, choisis parmi les esters alkyliques d'acides gras saturés en C₁₆-C₁₈ et les esters alkyliques d'acides gras insaturés en C₁₈, ainsi que des tensioactifs anioniques et/ou des tensioactifs non ioniques.

5. Composition selon l'une quelconque des revendications précédentes, **caractérisée en ce que** l'épaississant est choisi dans le groupe qui comprend ou consiste en la gomme de konjac, la gomme xanthane, le guar, la cellulose ainsi que les dérivés de gomme de konjac, gomme xanthane, guar et cellulose et également des associations quelconques de ceux-ci/celles-ci.

6. Composition selon l'une quelconque des revendications précédentes, **caractérisée en ce que** l'acide organique est l'acide citrique, l'acide d-tartrique ou l'acide oxalique et le dérivé de l'acide organique est un dérivé de l'acide citrique, de l'acide d-tartrique ou de l'acide oxalique.

7. Composition selon l'une quelconque des revendications précédentes, **caractérisée en ce que** la composition contient en tant qu'antimousse un polydiméthylsiloxane ou un polydiméthylsiloxane modifié.

8. Composition selon l'une quelconque des revendications précédentes, **caractérisée en ce que** la dispersion de cire est une dispersion de paraffine.

9. Composition selon l'une quelconque des revendications précédentes, **caractérisée en ce que** le conservateur est une substance à activité antimicrobienne à base de bromonitropropanediol et/ou d'isothiazolone.

10. Composition selon l'une quelconque des revendications précédentes, **caractérisée en ce que** l'émulsion contenant de l'ester alkylique d'acide gras contient ou consiste en
- 13,0-16,0 % en poids d'un ou de plusieurs esters alkyliques d'acides gras, choisis parmi les esters alkyliques d'acides gras saturés en C₁₆-C₁₈ et les esters alkyliques d'acides gras insaturés en C₁₈
- 5,0-8,0 % en poids de tensioactifs anioniques et/ou tensioactifs non ioniques
- 0,1-0,2 % en poids de conservateur ; et
- de l'eau.

11. Procédé pour la préparation d'une composition selon l'une quelconque des revendications précédentes, **caractérisé en ce qu'**on mélange
- au moins 35,0 % en poids d'eau ;
- 23,0-35,0 % en poids d'une émulsion contenant un ou plusieurs esters alkyliques d'acides gras ;
- 20,0-35,0 % en poids d'une dispersion de cire ;
- 0,5-1,5 % en poids de siloxane modifié avec un polyéther ;
- 0,1-0,3 % en poids d'antimousse ;
- 0,05-0,3 % en poids d'épaississant ;
- 0,05-0,3 % en poids de conservateur ;
- < 10% en poids d'un sucre et/ou d'un acide organique et/ou d'un dérivé d'un acide organique
pour obtenir une composition homogène.

12. Procédé selon la revendication 11, **caractérisé en ce qu'**on ajoute également à la composition des pigments colorés, la couleur des pigments étant choisie de telle façon qu'elle indique la profondeur moyenne d'élimination par lavage de la composition après un intervalle de temps défini après application sur une surface de béton.

13. Utilisation d'une composition selon l'une des revendications 1 à 10 dans la production de surfaces de béton à texturation de béton lavé, **caractérisée par** l'application de la composition sur une surface de béton comprenant une fraction de granulat et l'élimination d'une couche du béton mise en contact avec la composition et non totalement durcie, au moyen d'un jet d'eau et/ou par brossage après un intervalle de temps défini après l'application de la composition sur la surface de béton.
